# EUROPÄISCHE PATENTSCHRIFT

(11) **EP 1 216 826 B1**
(45) Veröffentlichungstag und Bekanntmachung des Hinweises auf die Patenterteilung: **10.01.2007**
(21) Anmeldenummer: 01125739.1
(22) Anmeldetag: 27.10.2001
(51) Int. Cl.: B32B 27/08, B32B 27/34, C09J 177/00, C08L 77/00, F16L 11/04, F16L 9/12, B65D 65/40

(54) **Mehrschichtverbund mit einer EVOH-Schicht**
Laminate with one EVOH layer
Film multicouche avec une couche d'EVOH

(30) Priorität: 21.12.2000 DE 10064333
(43) Veröffentlichungstag der Anmeldung: 26.06.2002
(73) Patentinhaber: Degussa AG, 40474 Düsseldorf (DE)
(72) Erfinder: Schmitz, Guido, Dr., 48249 Dülmen (DE); Häger, Harald, Dr., 45665 Recklinghausen (DE); Ries, Hans, Dr., 45772 Marl (DE); Bartz, Wilfried, Dr., 45770 Marl (DE)

(56) Entgegenhaltungen:
- EP-A- 0 246 102
- EP-A- 0 428 833
- EP-A- 0 445 706
- EP-A- 0 780 431
- EP-A- 1 036 968
- EP-A- 1 162 061
- US-A- 4 407 873
- US-A- 5 706 865

## Beschreibung

Gegenstand der Erfindung ist ein Mehrschichtverbund, der eine Sperrschicht aus EVOH sowie eine Schicht aus einer Formmasse beinhaltet, die ein spezielles Polyamid-Blend darstellt. Gegenstand der Erfindung ist weiterhin eine derartige Formmasse, die ein spezielles Polyamid-Copolymer enthält.

Bei der Entwicklung von Mehrschichtverbunden, die zum Beispiel als Rohr zur Führung flüssiger oder gasförmiger Medien in Kraftfahrzeugen eingesetzt werden, müssen die verwendeten Formmassen eine ausreichende chemische Beständigkeit gegenüber den zu führenden Medien aufweisen, und die Rohre müssen allen an sie gestellten mechanischen Anforderungen auch nach langfristiger Beanspruchung durch Kraftstoffe, Öle oder Temperatureinwirkung gewachsen sein. Neben der Forderung nach einer ausreichenden Kraftstoffbeständigkeit wird durch die Automobilindustrie eine verbesserte Sperrwirkung der Kraftstoffleitungen verlangt, um die Emissionen von Kohlenwasserstoffen in der Umwelt zu reduzieren. Dies hat zur Entwicklung von Mehrschichtrohrsystemen geführt, bei denen beispielsweise EVOH als Sperrschichtwerkstoff zum Einsatz kommt. Allerdings ist EVOH unverträglich mit PA11, PA12, PA612, PA1012 und PA1212, die wegen ihrer guten mechanischen Eigenschaften, ihres geringen Wasseraufnahmevermögens und ihrer Unempfindlichkeit gegenüber Umwelteinflüssen als Material für die Außenschicht in Frage kommen. Eine Haftung zwischen den beiden Schichten, die für die Anwendung unverzichtbar ist, kann somit nicht erhalten werden.

Allerdings ist EVOH verträglich mit PA6, PA66, PA6/66 oder mit Polyolefinen, die mit Maleinsäureanhydrid funktionalisiert sind. Formmassen auf Basis derartiger Polymerer sind jedoch als Material für die Außenschicht ungeeignet.

In der DE-PS 40 01 125 wird eine Kraftfahrzeugrohrleitung beschrieben, die aus einer rohrförmigen Außenschicht aus PA11 oder PA12, einer Zwischenschicht aus PA6, einer Sperrschicht aus EVOH und einer Innenschicht aus PA6 besteht. Zwischen der Außenschicht und der Zwischenschicht ist eine dünne Haftvermittlerschicht aus Polyethylen oder Polypropylen, die mit Maleinsäureanhydrid funktionalisiert sind, angeordnet.

Ein ähnliches System ist in der DE-PS 40 01 126 beschrieben. Dort besteht die Kraftfahrzeugrohrleitung aus einer rohrförmigen Außenschicht aus PA11 oder PA12, einer Sperrschicht aus EVOH und einer dazwischenliegenden Haftvermittlerschicht aus Polyethylen oder Polypropylen, die mit Maleinsäureanhydrid funktionalisiert sind.

Seit einiger Zeit werden jedoch von seiten der Automobilindustrie Forderungen nach einer erhöhten Beständigkeit bei höherer Temperatur gestellt. Damit scheiden Lösungen, die eine Polyolefinschicht beinhalten, wegen deren niedriger Wärmeformbeständigkeit aus.

Darüber hinaus hat sich gezeigt, dass bei längerem Kontakt mit wässrigen Flüssigkeiten oder alkoholhaltigem Kraftstoff, insbesondere in der Wärme, die Schichtenhaftung zwischen funktionalisiertem Polyolefin und Polyamid zusehends geringer wird und schließlich auf Werte abfällt, die in der Praxis nicht mehr akzeptabel sind; als Grund hierfür werden Alkoholyse- bzw. Hydrolysereaktionen angesehen.

Es war daher eine Aufgabe der vorliegenden Erfindung, einen Mehrschichtverbund mit einer EVOH-Sperrschicht bereitzustellen, bei dem alle Schichten eine ausreichende Wärmeformbeständigkeit besitzen.

Eine weitere Aufgabe bestand darin, eine EVOH-Sperrschicht mit einer Schicht fest zu verbinden, die aus einer Formmasse auf Basis von PA11, PA12, PA612, PA1012 oder PA1212 besteht, ohne hierfür eine Polyolefinschicht als Haftvermittler zu verwenden.

Schließlich sollte ein Mehrschichtverbund mit einer EVOH-Schicht bereitgestellt werden, dessen Schichtenhaftung auch bei längerem Kontakt mit alkoholhaltigen oder wässrigen Medien in der Wärme weitgehend erhalten bleibt.

Diese Aufgaben wurden durch einen Mehrschichtverbund gelöst, der nacheinander folgende Schichten enthält:
A. Eine Schicht aus einer Formmasse auf Basis von PA11, PA12, PA612, PA1012 und/oder PA1212,
B. eine Schicht I aus einer Formmasse, die folgende Komponenten enthält:
   a) 0 bis 80 Gew.-Teile eines Polyamids, ausgewählt aus PA6, PA66, PA6/66 und Mischungen hiervon,
   b) 0 bis 100 Gew.-Teile eines Polyamin-Polyamid-Copolymeren sowie
   c) 0 bis 80 Gew.-Teile eines Polyamids, ausgewählt aus PA11, PA12, PA612, PA1012, PA1212 und Mischungen hiervon,
   wobei die Summe der Gewichtsteile der Komponenten gemäß a), b) und c) 100 beträgt und wobei zusätzlich
   - in der Summe der Komponenten a) und b) mindestens 20 Gew.-Teile aus Monomereinheiten bestehen, die sich von Caprolactam und/oder der Kombination Hexamethylendiamin/Adipinsäure herleiten und
   - in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.12-Dodecandisäure und/oder der Kombination 1.12-Dodecandiamin/1.12-Dodecandisäure herleiten;
C. eine Schicht II aus einer Ethylen-Vinylalkohol-Copolymer (EVOH)-Formmasse.

Von der Komponente gemäß a) sind in der Formmasse der Schicht I bevorzugt mindestens 0,5 Gew.-Teile, besonders bevorzugt mindestens 10 Gew.-Teile, insbesondere bevorzugt mindestens 20 Gew.-Teile und ganz besonders bevorzugt mindestens 30 Gew.-Teile enthalten, während die Obergrenze bevorzugt bei 70 Gew.-Teilen und besonders bevorzugt bei 60 Gew.-Teilen liegt.

Von der Komponente gemäß b) sind in der Formmasse der Schicht I bevorzugt mindestens 0,5 Gew.-Teile, besonders bevorzugt mindestens 2 Gew.-Teile, insbesondere bevorzugt mindestens 5 Gew.-Teile und ganz besonders bevorzugt mindestens 10 Gew.-Teile enthalten, während die Obergrenze bevorzugt bei 80 Gew.-Teilen, besonders bevorzugt bei 60 Gew.-Teilen und insbesondere bevorzugt bei 40 Gew.-Teilen liegt. Entsprechende Formmassen sind ebenfalls Gegenstand der Erfindung.

Von der Komponente gemäß c) sind in der Formmasse der Schicht I bevorzugt mindestens 0,5 Gew.-Teile, besonders bevorzugt mindestens 10 Gew.-Teile, insbesondere bevorzugt mindestens 20 Gew.-Teile und ganz besonders bevorzugt mindestens 30 Gew.-Teile enthalten, während die Obergrenze bevorzugt bei 70 Gew.-Teilen und besonders bevorzugt bei 60 Gew.-Teilen liegt.

In einer ersten bevorzugten Ausführungsform liegt zwischen der Schicht I und der Schicht II eine Schicht aus einer Formmasse auf Basis von PA6, PA66 und/oder PA6/66. Auf der anderen Seite des Verbundes, d. h. anschließend an die Schicht II, können, falls gewünscht, eine oder mehrere Schichten aus jeder beliebigen Formmasse folgen, die auf II haftet.

In einer zweiten bevorzugten Ausführungsform befindet sich auf der anderen Seite des Verbunds ebenfalls eine Schicht I; zusätzlich kann noch eine Schicht aus einer Formmasse auf Basis von PA11, PA12, PA 612, PA1012 und/oder PA1212 folgen.

In einer dritten bevorzugten Ausfiihrungsform schließt sich auf der anderen Seite des Verbundes, d. h. an die Schicht II, eine Schicht aus einer Formmasse auf Basis von PA6, PA66 und/oder PA6/66 an.

In einer vierten bevorzugten Ausführungsform ist zumindest eine der Verbundschichten elektrisch leitfähig eingestellt, damit elektrostatische Aufladungen, die durch ein bewegtes Medium hervorgerufen werden, abgeleitet werden. Bevorzugt ist dies die Schicht, die direkt mit dem bewegten Medium im Kontakt steht.

In einer fünften bevorzugten Ausführungsform schließt sich an die Verbundschichten eine weitere, fest haftende Schicht an, die elektrisch leitfähig eingestellt ist.

In einer sechsten bevorzugten Ausführungsform enthält der Mehrschichtverbund zusätzlich eine Regeneratschicht. Bei der Herstellung erfindungsgemäßer Verbunde fällt immer wieder Abfall an, zum Beispiel vom Anfahrvorgang der Extrusionsanlage oder in Form von Butzen beim Extrusionsblasformen oder beim Konfektionieren von Rohren. Eine Regeneratschicht aus diesen Abfällen kann z. B. zwischen der Schicht I und einer äußeren Schicht aus einer Formmasse auf Basis von PA11, PA12, PA612, PA1012 oder PA1212 eingebettet sein. Grundsätzlich ist es bevorzugt, die Regeneratschicht zwischen zwei Schichten einzubetten, die aus Formmassen auf Basis von Polyamid bestehen, da hierdurch eine eventuelle Sprödigkeit des Regeneratblends kompensiert werden kann.

Diese und weitere Ausführungsformen können beliebig miteinander kombiniert werden.

Einige Beispiele für mögliche Schichtenkonfigurationen sind im Folgenden aufgeführt.

| **Konfiguration** | **Schichtenabfolge** |
|---|---|
| 1 | a) Schicht aus einer Formmasse auf Basis von PA11, PA12, PA612, PA1012 und/oder PA1212 |
| | b) Schicht I |
| | c) Schicht II |
| 2 | a) Schicht aus einer Formmasse auf Basis von PA11, PA12, PA612, PA1012 und/oder PA1212 |
| | b) Schicht I |
| | c) Schicht aus einer Formmasse auf Basis von PA6, PA66 und/oder PA6/66 |
| | d) Schicht II |
| 3 | a) Schicht aus einer Formmasse auf Basis von PA11, PA12, PA612, PA1012 und/oder PA1212 |
| | b) Schicht I |
| | c) Schicht II |
| | d) Schicht aus einer Formmasse auf Basis von PA6, PA66 und/oder PA6/66 |
| 4 | a) Schicht aus einer Formmasse auf Basis von PA11, PA12, PA612, PA1012 und/oder PA1212 |
| | b) Schicht I |
| | c) Schicht II |
| | d) Schicht I |
| 5 | a) Schicht aus einer Formmasse auf Basis von PA11, PA12, PA612, PA1012 und/oder PA1212 |
| | b) Schicht I |
| | c) Schicht II |
| | d) Schicht I |
| | e) Schicht aus einer Formmasse auf Basis von PA11, PA12, PA612, PA1012 und/oder PA1212 |
| 6 | a) Schicht aus einer Formmasse auf Basis von PA11, PA12, PA612, PA1012 und/oder PA1212 |
| | b) Regeneratschicht |
| | c) Schicht I |
| | d) Schicht II |
| | e) Schicht aus einer Formmasse auf Basis von PA6, PA66 und/oder PA6/66 |
| 7 | a) Schicht aus einer Formmasse auf Basis von PA11, PA12, PA612, PA1012 und/oder PA 1212 |
| | b) Schicht I |
| | c) Schicht II |
| | d) Schicht aus einer Formmasse auf Basis von PA6, PA66 und/oder PA6/66 |
| | e) Regeneratschicht |
| | f) Schicht aus einer Formmasse auf Basis von PA6, PA66 und/oder PA6/66 |

In allen diesen Fällen wird eine feste Schichtenhaftung erzielt.

Wenn der Mehrschichtverbund ein Hohlkörper oder Hohlprofil ist, so ist bevorzugt die Schicht II relativ zu einer Schicht I innenseitig angeordnet.

Die Schicht I ist im einfachsten Fall ein Blend aus den Komponenten gemäß a) und c). Da diese Polymeren miteinander weitgehend unverträglich sind, wird bei der Blendherstellung unter üblichen Verarbeitungstemperaturen, die zu einer physikalischen Mischung führt, nur in einem relativ engen Zusammensetzungsbereich eine ausreichende Haftvermittlerwirkung erzielt. Bessere Ergebnisse werden erhalten, wenn das Polyamidblend unter Bedingungen hergestellt wird, bei denen in einem gewissen Ausmaß die beiden Polyamide über die Endgruppen oder über Umamidierungsreaktionen miteinander zu Blockcopolymeren reagieren. Hierfür sind in der Regel Temperaturen oberhalb von 250 °C, bevorzugt oberhalb von 280 °C und besonders bevorzugt oberhalb von 300 °C und gegebenenfalls die Anwesenheit von Katalysatoren wie Hypophosphorige Säure, Dibutylzinnoxid, Triphenylphosphin oder Phosphorsäure erforderlich. Man kann auch von einem zunächst unter üblichen Verarbeitungsbedingungen hergestellten Polyamidblend ausgehen, das anschließend der Festphasennachkondensation unter Bedingungen unterworfen wird, die bei Polyamiden üblich sind. Dies sind in der Regel Temperaturen ab 140 °C bis etwa 5K unterhalb des Kristallitschmelzpunkts Tₘ, bevorzugt Temperaturen ab 150 °C bis etwa 10K unterhalb von Tₘ, mit Reaktionszeiten von 2 bis 48 Stunden, bevorzugt 4 bis 36 Stunden und besonders bevorzugt 6 bis 24 Stunden. Besonders vorteilhaft enthält das eine Polyamid einen Überschuss an Aminoendgruppen und das andere Polyamid einen Überschuss an Carboxylendgruppen. Schließlich kann eine Verknüpfung der Komponenten gemäß a) und c) auch durch Zugabe einer reaktiven Verbindung erzielt werden, die vorzugsweise die Polyamidendgruppen miteinander verknüpft, beispielsweise eines Bisoxazolins, Biscarbodiimids, Bisanhydrids, Diisocyanats oder der entsprechenden Verbindungen mit drei oder mehr funktionellen Gruppen.

Ein anderer Weg, die Komponenten gemäß a) und c) miteinander verträglich zu machen, ist die Zugabe einer wirksamen Menge der Komponente gemäß b).

Die einzelnen Komponenten werden im Folgenden näher erläutert.

PA6 wird durch ringöffnende Polymerisation von Caprolactam hergestellt.

PA66 wird durch Polykondensation von Hexamethylendiamin und Adipinsäure hergestellt. Es ist genauso wie PA6 in einer Vielzahl von Typen handelsüblich.

PA6/66 ist ein Copolykondensat ausgehend von den Monomeren Caprolactam, Hexamethylendiamin und Adipinsäure.

Das Polyamin-Polyamid-Copolymer wird unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Polyamin-Polyamid-Copolymer, eines Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäure.

In einer bevorzugten Ausführungsform liegt die Aminogruppenkonzentration des Polyamin-Polyamid-Copolymers im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE- OS 196 54 058);
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179) oder
   Tris(2-aminoethyl)amin, N,N-Bis(2-aminoethyl)-N',N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[bis[2-bis(2-aminoethyl)amino]ethyl]amino]ethyl]3,6,9,12,15-pentaazaheptadecan-1,17-diamin (J.M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Polyamin-Polyamid-Copolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Wird eine Dicarbonsäure verwendet, setzt man bevorzugt 0,03 bis 2,2 Mol-%, besonderes bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und insbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1,4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, dass das Polyamin-Polyamid-Copolymer einen substantiellen Anteil an Aminogruppen besitzt. Vorzugsweise liegt die Aminogruppenkonzentration des Copolymers im Bereich von 150 bis 1 500 mmol/kg, besonders bevorzugt im Bereich von 250 bis 1 300 mmol/kg und ganz besonders bevorzugt im Bereich von 300 bis 1 100 mmol/kg. Unter Aminogruppen werden hier und im Folgenden nicht nur Aminoendgruppen, sondern auch gegebenenfalls vorhandene sekundäre bzw. tertiäre Aminfunktionen des Polyamins verstanden.

Beim Polyamin-Polyamid-Copolymer kann die Zusammensetzung des Polyamidanteils in einem sehr weiten Bereich variieren, da die Verträglichkeit mit den Polyamiden der Komponenten gemäß a) und c) offenbar von anderen Faktoren bestimmt wird und in der Regel gegeben ist.

Die Polyamin-Polyamid-Copolymere können nach verschiedenen Verfahren hergestellt werden.

Eine Möglichkeit besteht darin, die polyamidbildenden Monomere und das Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, dass in einem zweistufigen Prozess zuerst gegebenenfalls die Lactamspaltung und die Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, dass eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das Polyamin-Polyamid-Copolymere gemäß dem Stand der Technik auch in fester Phase nachkondensiert werden.

PA11 wird durch Polykondensation von ω-Aminoundecansäure hergestellt, während PA12 durch ringöffnende Polymerisation von Laurinlactam erhalten wird. Beide Polymere sind in einer Vielzahl von Typen im Handel erhältlich.

PA612 wird auf bekannte Weise durch Polykondensation einer äquivalenten Mischung aus Hexamethylendiamin und 1.12-Dodecandisäure hergestellt. Es wird im Rahmen der vorliegenden Erfindung insbesondere dann eingesetzt, wenn eine besonders hohe Wärmeformbeständigkeit des Mehrschichtverbunds gefordert wird, z.B. bei Anwendungen im Motorraum von Kraftfahrzeugen.

PA1012 wird durch Polykondensation einer äquivalenten Mischung aus 1.10-Decandiamin und 1.12-Dodecandisäure hergestellt, während PA1212 auf gleiche Weise aus 1.12-Dodecandiamin und 1.12-Dodecandisäure erhalten wird.

Mit Vorteil können hier auch Mischungen verschiedener Polyamide eingesetzt werden, z. B. PA12/PA1012 oder PA12/PA1212. Derartige Mischungen zeichnen sich durch eine besonders hohe Tieftemperaturschlagzähigkeit aus; sie sind beispielsweise in der EP-A-0 388 583 beschrieben.

Insbesondere wenn der Mehrschichtverbund als Lebensmittelverpackung eingesetzt werden soll, kann es vorteilhaft sein, bei einer äußeren Schicht anstelle der Homopolyamide Copolyamide einzusetzen, um durch Absenken des Schmelzpunktes die Schicht heißsiegelfähig zu machen. Geeignete Comonomere stehen dem Fachmann in breiter Auswahl zur Verfügung, beispielsweise Caprolactam, Laurinlactam oder die äquimolare Kombination eines C₆-C₁₂-Diamins mit einer C₆-C₁₂-Dicarbonsäure.

Die eingesetzten Polyamidformmassen können maximal etwa 50 Gew.-% Zusatzstoffe enthalten, die ausgewählt sind aus schlagzähmachendem Kautschuk und/oder üblichen Hilfs-bzw. Zuschlagstoffen.

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Daneben können die Formmassen noch kleinere Mengen von Hilfs- bzw. Zuschlagstoffen enthalten, die zum Einstellen bestimmter Eigenschaften benötigt werden. Beispiele hierfür sind Weichmacher, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer möglichen Ausführungsform enthalten die Formmassen 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

EVOH ist seit langem bekannt. Es ist ein Copolymer aus Ethylen und Vinylalkohol und wird manchmal auch als EVAL bezeichnet. Der Ethylengehalt im Copolymeren beträgt in der Regel 25 bis 60 Mol-% und insbesondere 28 bis 45 Mol-%. Eine Vielzahl von Typen ist im Handel erhältlich. Beispielsweise sei auf die Firmenschrift "Introduction to Kuraray EVAL™ Resins", Version 1.2/9810 der Firma Kuraray EVAL Europe verwiesen.

Beim erfindungsgemäßen Mehrschichtverbund handelt es sich in einer Ausführungsform um ein Rohr, einen Einfüllstutzen oder um einen Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z. B. US 5 460 771), weshalb sich weitere Ausführungen hierzu erübrigen. Wichtige Einsatzzwecke solcher Mehrschichtverbunde sind die Verwendung als Kraftstoffleitung, als Tankeinfüllstutzen, als Vapor Line (d. h. Leitung, in der Kraftstoffdämpfe geleitet werden, z. B. Entlüftungsleitungen), als Tankstellenleitung, als Kühlflüssigkeitsleitung, als Klimaanlagenleitung oder als Kraftstoffbehälter.

Der erfindungsgemäße Mehrschichtverbund kann auch als flächiger Verbund vorliegen, beispielsweise als Folie, etwa als Verpackungsfolie für Lebensmittel, wo die Sperrwirkung des EVOH für Gase wie z. B. Sauerstoff und Kohlendioxid ausgenutzt wird.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω/square. Die Meßmethode zur Bestimmung des Widerstands von mehrschichtigen Rohren ist in der SAE J 2260 (November 1996, Paragraph 7.9) erläutert.

Bei der Ausführung des erfindungsgemäßen Mehrschichtverbundes als Hohlkörper oder Hohlprofil (z. B. Rohr) kann dieser noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf den Mehrschichtverbund aufgebracht werden, beispielsweise mittels Extrusion über einen Querspritzkopf oder dadurch, dass ein vorgefertigter Elastomerschlauch über das fertig extrudierte Mehrschichtrohr geschoben wird. In der Regel besitzt die Ummantelung eine Dicke von 0,1 bis 4 mm und bevorzugt von 0,2 bis 3 mm.

Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, weichgemachtes PVC, Polyetheresteramide oder Polyetheramide.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. in der US 5 554 425 beschrieben.

Die Erfindung wird im Folgenden beispielhaft erläutert.

In den Beispielen wurden folgende Komponenten bzw. Formmassen verwendet:
- VESTAMID^{®} X7293,: eine weichgemachte und schlagzähmodifizierte Extrusionsformmasse auf Basis von PA12 der Degussa AG, Düsseldorf
- VESTAMID^{®} ZA7295,: eine Extrusionsformmasse aus PA12 der Degussa AG, Düsseldorf
- ULTRAMID^{®} B4,: ein PA6 der BASF AG, Ludwigshafen
- ULTRAMID^{®} B5W,: ein PA6 der BASF AG, Ludwigshafen
- VESTAMID^{®} D22,: ein hochviskoses PA612 der Degussa AG, Düsseldorf
- EVAL^{®} F101,: ein EVOH der Fa. KURARAY mit 32 mol-% Ethylen
- EXXELOR^{®} VA1803,: ein mit Maleinsäureanhydrid funktionalisierter Ethylen-Propylen-Kautschuk der Fa. EXXON

### Polyethylenimin-PA6-Copolymer:

4,78 kg Caprolactam wurden in einem Aufheizkessel bei 180 bis 210 °C aufgeschmolzen und in einen druckfesten Polykondensationskessel überführt. Dann wurden 250 ml Wasser und 57 ppm Hypophosphorige Säure zugegeben. Die Caprolactamspaltung wurde bei 280 °C unter dem sich einstellenden Eigendruck durchgeführt. Anschließend wurde innerhalb von 3 h auf einen Restwasserdampfdruck von 3 bar entspannt und 230 g Polyethylenimin (LUPASOL^{®} G 100, BASF AG, Ludwigshafen) zugegeben. Danach wurde auf Normaldruck entspannt und unter Überleiten von Stickstoff 2 h bei 250 °C polykondensiert. Die klare Schmelze wurde über eine Schmelzepumpe als Strang ausgetragen, im Wasserbad abgekühlt und anschließend granuliert. Das erhaltene Copolymer hatte einen Polyethyleniminanteil von 4,5 Gew.-% und einen PA6-Anteil von 95,5 Gew.-%.

### Beispiel 1:

Mit Hilfe eines Doppelschneckenextruders Berstorff ZE 25 wurde bei 280 °C eine innige Mischung aus 35,3 Gew.-% VESTAMID^{®} D22, 48,1 Gew.-% ULTRAMID^{®} B5W, 10,7 Gew.-% des Polyethylenimin-PA6-Copolymers und 5,4 Gew.-% EXXELOR^{®} VA1803 hergestellt, als Strang extrudiert, granuliert und getrocknet.

Unter Verwendung dieser Mischung wurde ein Vierschichtrohr mit einem Außendurchmesser von 8 mm und einer Gesamtwandstärke von 1 mm mittels Coextrusion hergestellt, und zwar mit folgender Schichtenkonfiguration:
- Außenschicht (0,3 mm): aus einer weichgemachten, schlagzähmodifizierten PA612-Extrusionsformmasse,
- 2. Schicht (0,1 mm): aus der eingangs hergestellten Mischung
- 3. Schicht (0,15 mm): aus EVAL^{®} F101,
- Innenschicht (0,45 mm): aus einer weichgemachten, schlagzähmodifizierten PA6-Formmasse.

An allen Phasengrenzflächen wurde hierbei eine untrennbare Haftung erzielt.

### Vergleichsbeispiel 1:

Es wurde ein Dreischichtrohr mittels Coextrusion hergestellt, das sich vom Rohr des Beispiels 1 nur dadurch unterschied, dass die 2. Schicht aus der im Beispiel 1 eingangs hergestellten Mischung weggelassen wurde und sich dafür die Dicke der Außenschicht änderte. Das Rohr hatte somit folgende Schichtenkonfiguration:
- Außenschicht (0,4 mm): weichgemachte, schlagzähmodifizierte PA612-Extrusionsform-masse,
- Mittelschicht (0,15 mm): EVAL^{®} F101,
- Innenschicht (0,45 mm): weichgemachte, schlagzähmodifizierte PA6-Formmasse.

Hierbei wurde zwischen Außenschicht und Mittelschicht keine Haftung erzielt.

### Beispiel 2:

Mit Hilfe eines Doppelschneckenextruders Berstorff ZE 25 wurde bei 320 °C eine innige Mischung aus 8,1 kg VESTAMID^{®} ZA 7295 und 9,0 kg ULTRAMID^{®} B4 hergestellt, als Strang extrudiert, granuliert und getrocknet. Hierbei wurden in gewissem Ausmaß Umamidierungsreaktionen festgestellt, die zu Blockcopolymeren führten.

Unter Verwendung dieser Mischung wurde ein Vierschichtrohr mit einem Außendurchmesser von 8 mm und einer Gesamtwandstärke von 1 mm mittels Coextrusion hergestellt, und zwar mit folgender Schichtenkonfiguration:
- Außenschicht (0,3 mm): aus VESTAMID^{®} X7293,
- 2. Schicht (0,1 mm): aus der eingangs hergestellten Mischung
- 3. Schicht (0,15 mm): aus EVAL^{®} F101,
- Innenschicht (0,45 mm): aus einer weichgemachten, schlagzähmodifizierten PA6-Formmasse.

An allen Phasengrenzflächen wurde hierbei eine untrennbare Haftung erzielt.

### Vergleichsbeispiel 2:

Es wurde ein Dreischichtrohr mittels Coextrusion hergestellt, das sich vom Rohr des Beispiels 2 nur dadurch unterschied, dass die 2. Schicht aus der im Beispiel 2 eingangs hergestellten Mischung weggelassen wurde und sich dafür die Dicke der Außenschicht änderte. Das Rohr hatte somit folgende Schichtenkonfiguration:
- Außenschicht (0,4 mm): aus VESTAMID^{®} X7293,
- Mittelschicht (0,15 mm): aus EVAL^{®} F101,
- Innenschicht (0,45 mm): aus einer weichgemachten, schlagzähmodifizierten PA6-Formmasse.

Hierbei wurde zwischen Außenschicht und Mittelschicht keine Haftung erzielt.

## Patentansprüche

1. Mehrschichtverbund, der nacheinander folgende Schichten enthält:
A. Eine Schicht aus einer Formmasse auf Basis von PA11, PA12, PA612, PA1012 und/oder PA1212,
B. eine Schicht I aus einer Formmasse, die folgende Komponenten enthält:
a) 0 bis 80 Gew.-Teile eines Polyamids,
ausgewählt aus PA6, PA66, PA6/66 und Mischungen hiervon,
b) 0 bis 100 Gew.-Teile eines Polyamin-Polyamid-Copolymers, das unter Verwendung folgender Monomerer hergestellt wird:
α) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
β) polyamidbildende Monomere, ausgewählt aus Lactamen, ω-Aminocarbonsäuren und/oder äquimolaren Kombinationen von Diamin und Dicarbonsäure,
c) 0 bis 80 Gew.-Teile eines Polyamids, ausgewählt aus PA11, PA12, PA612, PA1012, PA1212 und Mischungen hiervon,
wobei die Summe der Gewichtsteile der Komponenten gemäß a), b) und c) 100 beträgt und wobei zusätzlich
- in der Summe der Komponenten a) und b) mindestens 20 Gew.-Teile aus Monomereinheiten bestehen, die sich von Caprolactam und/oder der Kombination Hexamethylendiamin/Adipinsäure herleiten und
- in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.12-Dodecandisäure und/oder der Kombination 1.12-Dodecandiamin/1.12-Dodecandisäure herleiten,
C. eine Schicht II aus einer Ethylen-Vinylalkohol-Copolymer-Formmasse.

2. Mehrschichtverbund gemäß Anspruch 1,
**dadurch gekennzeichnet,**
**dass** die Formmasse der Schicht I enthält:
- mindestens 0,5 Gew.-Teile der Komponente gemäß a)
und/oder
- mindestens 0,5 Gew.-Teile der Komponente gemäß b)
und/oder
- mindestens 0,5 Gew.-Teile der Komponente gemäß c).

3. Mehrschichtverbund gemäß einem der Ansprüche 1 und 2,
**dadurch gekennzeichnet,**
**dass** die Formmasse der Schicht I enthält:
- mindestens 10 Gew.-Teile der Komponente gemäß a)
und/oder
- mindestens 2 Gew.-Teile der Komponente gemäß b)
und/oder
- mindestens 10 Gew.-Teile der Komponente gemäß c).

4. Mehrschichtverbund gemäß einem der vorhergehenden Ansprüche,
**dadurch gekennzeichnet,**
**dass** die Formmasse der Schicht I enthält:
- mindestens 20 Gew.-Teile der Komponente gemäß a)
und/oder
- mindestens 5 Gew.-Teile der Komponente gemäß b)
und/oder
- mindestens 20 Gew.-Teile der Komponente gemäß c).

5. Mehrschichtverbund gemäß einem der vorhergehenden Ansprüche,
**dadurch gekennzeichnet,**
**dass** die Formmasse der Schicht I enthält.
- mindestens 30 Gew.-Teile der Komponente gemäß a)
und/oder
- mindestens 10 Gew.-Teile der Komponente gemäß b)
und/oder
- mindestens 30 Gew.-Teile der Komponente gemäß c).

6. Mehrschichtverbund gemäß einem der vorhergehenden Ansprüche,
**dadurch gekennzeichnet,**
**dass** die Formmasse der Schicht I enthält:
- maximal 70 Gew.-Teile der Komponente gemäß a) oder
- maximal 80 Gew.-Teile der Komponente gemäß b) oder
- maximal 70 Gew.-Teile der Komponente gemäß c).

7. Mehrschichtverbund gemäß einem der vorhergehenden Ansprüche,
**dadurch gekennzeichnet,**
**dass** die Formmasse der Schicht I enthält:
- maximal 60 Gew.-Teile der Komponente gemäß a) oder
- maximal 60 Gew.-Teile der Komponente gemäß b) oder
- maximal 60 Gew.-Teile der Komponente gemäß c).

8. Mehrschichtverbund gemäß einem der vorhergehenden Ansprüche,
**dadurch gekennzeichnet,**
**dass** die Formmasse der Schicht I maximal 40 Gew.-Teile der Komponente gemäß b) enthält.

9. Mehrschichtverbund gemäß einem der vorhergehenden Ansprüche,
**dadurch gekennzeichnet,**
**dass** das Polyamin-Polyamid-Copolymer unter Verwendung von 1 bis 20 Gew.-% des Polyamins hergestellt wird.

10. Mehrschichtverbund gemäß einem der vorhergehenden Ansprüche,
**dadurch gekennzeichnet,**
**dass** das Polyamin-Polyamid-Copolymer unter Verwendung von 1,5 bis 16 Gew.-% des Polyamins hergestellt wird.

11. Mehrschichtverbund gemäß einem der vorhergehenden Ansprüche,
**dadurch gekennzeichnet,**
**dass** das Polyamin mindestens 8 Stickstoffatome enthält.

12. Mehrschichtverbund gemäß einem der vorhergehenden Ansprüche,
**dadurch gekennzeichnet,**
**dass** das Polyamin mindestens 11 Stickstoffatome enthält.

13. Mehrschichtverbund gemäß einem der vorhergehenden Ansprüche,
**dadurch gekennzeichnet,**
**dass** das Polyamin ein zahlenmittleres Molekulargewicht Mₙ von mindestens 500 g/mol besitzt.

14. Mehrschichtverbund gemäß einem der vorhergehenden Ansprüche,
**dadurch gekennzeichnet,**
**dass** das Polyamin ein zahlenmittleres Molekulargewicht Mₙ von mindestens 800 g/mol besitzt.

15. Mehrschichtverbund gemäß einem der vorhergehenden Ansprüche,
**dadurch gekennzeichnet,**
**dass** die Aminogruppenkonzentration des Polyamin-Polyamid-Copolymers im Bereich von 100 bis 2 500 mmol/kg liegt.

16. Mehrschichtverbund gemäß einem der vorhergehenden Ansprüche,
**dadurch gekennzeichnet,**
**dass** die Formmasse der Schicht I Blockcopolymere enthält, die aus den Komponenten gemäß a) und c) gebildet wurden.

17. Mehrschichtverbund gemäß einem der vorhergehenden Ansprüche,
**dadurch gekennzeichnet,**
**dass** er zusätzlich mindestens eine Schicht aus einer Formmasse auf Basis von PA6, PA66 und/oder PA6/66 enthält.

18. Mehrschichtverbund gemäß einem der vorhergehenden Ansprüche,
**dadurch gekennzeichnet,**
**dass** er zwei Schichten I enthält.

19. Mehrschichtverbund gemäß einem der vorhergehenden Ansprüche,
**dadurch gekennzeichnet,**
**dass** er zusätzlich eine Regeneratschicht enthält.

20. Mehrschichtverbund gemäß einem der vorhergehenden Ansprüche,
**dadurch gekennzeichnet,**
**dass** er die Schichtenfolge I/II/I enthält.

21. Mehrschichtverbund gemäß einem der Ansprüche 1 bis 17 sowie 19,
**dadurch gekennzeichnet,**
**dass** er folgende Schichtenfolge enthält:
a) Schicht aus einer Formmasse auf Basis von PA11, PA12, PA612, PA1012 und/oder PA1212,
b) Schicht I
c) Schicht II
d) Schicht aus einer Formmasse auf Basis von PA6, PA66 und/oder PA6/66.

22. Mehrschichtverbund gemäß einem der vorhergehenden Ansprüche,
**dadurch gekennzeichnet,**
**dass** die Außenschicht aus einer Formmasse auf Basis von PA11, PA12, PA612, PA1012 und/oder PA1212 besteht.

23. Mehrschichtverbund gemäß einem der vorhergehenden Ansprüche,
**dadurch gekennzeichnet,**
**dass** eine der Schichten elektrisch leitfähig eingestellt ist.

24. Mehrschichtverbund gemäß einem der Ansprüche 1 bis 22,
**dadurch gekennzeichnet,**
**dass** sich an die innerste Schicht noch eine zusätzliche, elektrisch leitfähige Schicht anschließt.

25. Mehrschichtverbund gemäß einem der vorhergehenden Ansprüche,
**dadurch gekennzeichnet,**
**dass** die eingesetzten Polyamidformmassen maximal 50 Gew.-% Zusatzstoffe enthalten.

26. Mehrschichtverbund gemäß einem der vorhergehenden Ansprüche,
**dadurch gekennzeichnet,**
**dass** er ein Rohr ist.

27. Mehrschichtverbund gemäß Anspruch 26,
**dadurch gekennzeichnet,**
**dass** er vollständig oder in Teilbereichen gewellt ist.

28. Mehrschichtverbund gemäß einem der Ansprüche 1 bis 25,
**dadurch gekennzeichnet,**
**dass** er ein Hohlkörper ist.

29. Mehrschichtverbund gemäß einem der vorhergehenden Ansprüche,
**dadurch gekennzeichnet,**
**dass** sich an die äußerste Schicht noch eine Elastomerschicht anschließt.

30. Mehrschichtverbund gemäß einem der Ansprüche 1 bis 27 sowie 29,
**dadurch gekennzeichnet,**
**dass** er eine Kraftstoffleitung, eine Bremsflüssigkeitsleitung, eine Kühlflüssigkeitsleitung, eine Hydraulikflüssigkeitsleitung, eine Tankstellenleitung, eine Klimaanlagenleitung oder eine Vapor Line ist.

31. Mehrschichtverbund gemäß einem der Ansprüche 28 und 29,
**dadurch gekennzeichnet,**
**dass** er ein Behälter, insbesondere ein Kraftstoffbehälter, oder ein Einfüllstutzen, insbesondere ein Tankeinfüllstutzen ist.

32. Mehrschichtverbund gemäß einem der Ansprüche 1 bis 23,
**dadurch gekennzeichnet,**
**dass** er eine Folie ist.

33. Mehrschichtverbund gemäß einem der vorhergehenden Ansprüche,
**dadurch gekennzeichnet,**
**dass** er mittels Mehrkomponentenspritzguss, Coextrusion oder Coextrusionsblasformen hergestellt wird.

34. Formmasse, die folgende Komponenten enthält:
a) 0 bis 80 Gew.-Teile eines Polyamids,
ausgewählt aus PA6, PA66, PA6/66 und Mischungen hiervon,
b) 0,5 bis 100 Gew.-Teile eines Polyamin-Polyamid-Copolymers, das unter Verwendung folgender Monomerer hergestellt wird:
α) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
β) polyamidbildende Monomere, ausgewählt aus Lactamen, ω-Aminocarbonsäuren und/oder äquimolaren Kombinationen von Diamin und Dicarbonsäure,
c) 0 bis 80 Gew.-Teile eines Polyamids, ausgewählt aus PA11, PA12, PA612, PA1012, PA1212 und Mischungen hiervon,
wobei die Summe der Gewichtsteile der Komponenten gemäß a), b) und c) 100 beträgt und wobei zusätzlich
- in der Summe der Komponenten a) und b) mindestens 20 Gew.-Teile aus Monomereinheiten bestehen, die sich von Caprolactam und/oder der Kombination Hexamethylendiamin/Adipinsäure herleiten und
- in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.12-Dodecandisäure und/oder der Kombination 1.12-Dodecandiamin/1.12-Dodecandisäure herleiten.

35. Formmasse, die folgende Komponenten enthält:
a) 0 bis 80 Gew.-Teile eines Polyamids,
ausgewählt aus PA6, PA66, PA6/66 und Mischungen hiervon,
b) 0 bis 100 Gew.-Teile eines Polyamin-Polyamid-Copolymers, das unter Verwendung folgender Monomerer hergestellt wird:
α) 0,5 bis 25 Gew.-%, bezogen auf das Polyamin-Polyamid-Copolymer, eines Polyamins mit mindestens 4 Stickstoffatomen und einem zahlenmittleren Molekulargewicht Mₙ von mindestens 146 g/mol sowie
β) polyamidbildende Monomere, ausgewählt aus Lactamen, ω-Aminocarbonsäuren und/oder äquimolaren Kombinationen von Diamin und Dicarbonsäure,
c) 0 bis 80 Gew.-Teile eines Polyamids, ausgewählt aus PA11, PA12, PA612, PA1012, PA1212 und Mischungen hiervon,
wobei die Summe der Gewichtsteile der Komponenten gemäß a), b) und c) 100 beträgt und wobei zusätzlich
- in der Summe der Komponenten a) und b) mindestens 20 Gew.-Teile aus Monomereinheiten bestehen, die sich von Caprolactam und/oder der Kombination Hexamethylendiamin/Adipinsäure herleiten und
- in der Summe der Komponenten b) und c) mindestens 20 Gew.-Teile aus Monomereinheiten bestehen, die sich von ω-Aminoundecansäure, Laurinlactam, der Kombination Hexamethylendiamin/1.12-Dodecandisäure, der Kombination 1.10-Decandiamin/1.12-Dodecandisäure und/oder der Kombination 1.12-Dodecandiamin/1.12-Dodecandisäure herleiten,
- die Formmasse Blockcopolymere enthält, die aus den Komponenten gemäß a) und c) gebildet wurden.

## Claims

1. Composite having two or more layers and comprising the following successive layers:
A. a layer made from a molding composition based on PA11, PA12, PA612, PA1012 and/or PA1212,
B. a layer I made from a molding composition which comprises the following components:
a) from 0 to 80 parts by weight of a polyamide selected from PA6, PA66, PA6/66 and mixtures of these,
b) from 0 to 100 parts by weight of a polyamine-polyamide copolymer prepared using the following monomers:
α) from 0.5 to 25% by weight, based on the polyamine-polyamide copolymer, of a polyamine having at least 4 nitrogen atoms and having a number-average molar mass Mₙ of at least 146 g/mol, and
β) polyamide-forming monomers selected from lactams, ω-aminocarboxylic acids, and/or equimolar combinations of diamine and dicarboxylic acid, and
c) from 0 to 80 parts by weight of a polyamide selected from PA11, PA12, PA612, PA1012, PA1212 and mixtures of these,
where the total of the parts by weight of components a),b) and c) is 100, and where in addition
- within the entirety of components a) and b), at least 20 parts by weight are composed of monomer units which derive from caprolactam and/or from the combination hexamethylene-diamine/adipic acid, and
- within the entirety of components b) and c), at least 20 parts by weight are composed of monomer units which derive from ω-amino-undecanoic acid, laurolactam, the combination hexamethylenediamine/1,12-dodecane-dioic acid, the combination 1,10-decanediamine/1,12-dodecanedioic acid, and/or the combination 1,12-dodecanediamine/1,12-dodecanedioic acid, and
C. a layer II made from an ethylene-vinyl alcohol copolymer molding composition.

2. Composite having two or more layers, according to Claim 1,
**characterized in that**
the molding composition of layer I comprises:
- at least 0.5 part by weight of component a)
and/or
- at least 0.5 part by weight of component b)
and/or
- at least 0.5 part by weight of component c).

3. Composite having two or more layers, according to either Claim 1 or 2,
**characterized in that**
the molding composition of layer I comprises:
- at least 10 parts by weight of component a)
and/or
- at least 2 parts by weight of component b)
and/or
- at least 10 parts by weight of component.c).

4. Composite having two or more layers, according to any of the preceding claims,
**characterized in that**
the molding composition of layer I comprises:
- at least 20 parts by weight of component a)
and/or
- at least 5 parts by weight of component b)
and/or
- at least 20 parts by weight of component c).

5. Composite having two or more layers, according to any of the preceding claims,
**characterized in that**
the molding composition of layer I comprises:
- at least 30 parts by weight of component a)
and/or
- at least 10 parts by weight of component b)
and/or
- at least 30 parts by weight of component c).

6. Composite having two or more layers, according to any of the preceding claims,
**characterized in that**
the molding composition of layer I comprises:
- at most 70 parts by weight of component a) or
- at most 80 parts by weight of component b) or
- at most 70 parts by weight of component c).

7. Composite having two or more layers, according to any of the preceding claims,
**characterized in that**
the molding composition of layer I comprises:
- at most 60 parts by weight of component a) or
- at most 60 parts by weight of component b) or
- at most 60 parts by weight of component c).

8. Composite having two or more layers, according to any of the preceding claims,
**characterized in that**
the molding composition of layer I has not more than 40 parts by weight of component b).

9. Composite having two or more layers according to any of the preceding claims,
**characterized in that**
the polyamine-polyamide copolymer is prepared using from 1 to 20% by weight of the polyamine.

10. Composite having two or more layers according to any of the preceding claims,
**characterized in that**
the polyamine-polyamide copolymer is prepared using from 1.5 to 16% by weight of the polyamine.

11. Composite having two or more layers, according to any of the preceding claims,
**characterized in that**
the polyamine contains at least 8 nitrogen atoms.

12. Composite having two or more layers, according to any of the preceding claims,
**characterized in that**
the polyamine contains at least 11 nitrogen atoms.

13. Composite having two or more layers according to any of the preceding claims,
**characterized in that**
the polyamine has a number-average molar mass Mₙ of at least 500 g/mol.

14. Composite having two or more layers according to any of the preceding claims,
**characterized in that**
the polyamine has a number-average molar mass Mₙ of at least 800 g/mol.

15. Composite having two or more layers according to any of the preceding claims,
**characterized in that**
the amino group concentration in the polyamine-polyamide copolymer is in the range from 100 to 2 500 mmol/kg.

16. Composite having two or more layers according to any of the preceding claims,
**characterized in that**
the molding composition of layer I comprises block copolymers which have been formed from components a) and c).

17. Composite having two or more layers, according to any of the preceding claims,
**characterized in that**
the composite also comprises at least one layer made from a molding composition based on PA6, PA66, and/or PA6/66.

18. Composite having two or more layers, according to any of the preceding claims,
**characterized in that**
the composite comprises two layers I.

19. Composite having two or more layers, according to any of the preceding claims,
**characterized in that**
the composite also comprises a regrind layer.

20. Composite having two or more layers, according to any of the preceding claims,
**characterized in that**
the composite comprises the layer sequence I/II/I.

21. Composite having two or more layers, according to any of claims 1 to 17 and 19,
**characterized in that**
the composite comprises the following sequence of layers:
a) layer made from a molding composition based on PA11, PA12, PA612, PA1012, and/or PA1212,
b) layer I
c) layer II
d) layer made from a molding composition based on PA6, PA66, and/or PA6/66.

22. Composite having two or more layers, according to any of the preceding claims,
**characterized in that**
the outer layer is composed of a molding composition based on PA11, PA12, PA612, PA1012, and/or PA1212.

23. Composite having two or more layers, according to any of the preceding claims,
**characterized in that**
one of the layers has been rendered electrically conductive.

24. Composite having two or more layers, according to any of Claims 1 to 22,
**characterized in that**
there is also an additional, electrically conductive layer adjacent to the innermost layer.

25. Composite having two or more layers, according to any of the preceding claims,
**characterized in that**
the polyamide molding compositions used comprise not more than 50% by weight of additives.

26. Composite having two or more layers, according to any of the preceding claims,
**characterized in that**
the composite is a tube.

27. Composite having two or more layers, according to Claim 26,
**characterized in that**
some regions, or all, of the composite are corrugated.

28. Composite having two or more layers, according to any of Claims 1 to 25,
**characterized in that**
the composite is a hollow article.

29. Composite having two or more layers, according to any of the preceding claims,
**characterized in that**
there is also an elastomer layer adjacent to the outermost layer.

30. Composite having two or more layers, according to any of Claims 1 to 27 and 29,
**characterized in that**
the composite is fuel piping, brake-fluid piping, coolant piping, hydraulic-fluid piping, fuel-pump piping, air-conditioner piping, or a vapor line.

31. Composite having two or more layers, according to either Claim 28 or Claim 29,
**characterized in that**
the composite is a container, in particular a fuel container, or a filler pipe, in particular a filler pipe for a tank.

32. Composite having two or more layers, according to any of Claims 1 to 23,
**characterized in that**
the composite is a film.

33. Composite having two or more layers, according to any of the preceding claims,
**characterized in that**
the composite is produced by multicomponent injection molding, coextrusion or coextrusion blow molding.

34. Molding composition which comprises the following components:
a) from 0 to 80 parts by weight of a polyamide selected from PA6, PA66, PA6/66 and mixtures of these,
b) from 0.5 to 100 parts by weight of a polyamine-polyamide copolymer prepared using the following monomers:
α) from 0.5 to 25% by weight, based on the polyamine-polyamide copolymer, of a polyamine having at least 4 nitrogen atoms and having a number-average molar mass Mₙ of at least 146 g/mol, and
β) polyamide-forming monomers selected from lactams, ω-aminocarboxylic acids, and/or equimolar combinations of diamine and dicarboxylic acid, and
c) from 0 to 80 parts by weight of a polyamide selected from PA11, PA12, PA612, PA1012, PA1212 and mixtures of these,
where the total of the parts by weight of components a), b) and c) is 100, and where in addition
- within the entirety of components a) and b), at least 20 parts by weight are composed of monomer units which derive from caprolactam and/or from the combination hexamethylene-diamine/adipic acid, and
- within the entirety of components b) and c), at least 20 parts by weight are composed of monomer units which derive from ω-aminoundecanoic acid, laurolactam, the combination hexamethylenediamine/1,12-dodecanedioic acid, the combination 1,10-decanediamine/1,12-dodecanedioic acid, and/or the combination 1,12-dodecanediamine/1,12-dodecanedioic acid.

35. Molding composition which comprises the following components:
a) from 0 to 80 parts by weight of a polyamide selected from PA6, PA66, PA6/66 and mixtures of these,
b) from 0 to 100 parts by weight of a polyamine-polyamide copolymer prepared using the following monomers:
α) from 0.5 to 25% by weight, based on the polyamine-polyamide copolymer, of a polyamine having at least 4 nitrogen atoms and having a number-average molar mass Mₙ of at least 146 g/mol, and
β) polyamide-forming monomers selected from lactams, ω-aminocarboxylic acids, and/or equimolar combinations of diamine and dicarboxylic acid, and
c) from 0 to 80 parts by weight of a polyamide selected from PA11, PA12, PA612, PA1012, PA1212 and mixtures of these,
where the total of the parts by weight of components. a),b) and c) is 100, and where in addition
- within the entirety of components a) and b), at least 20 parts by weight are composed of monomer units which derive from caprolactam and/or from the combination hexamethylene-diamine/adipic acid, and
- within the entirety of components b) and c), at least 20 parts by weight are composed of monomer units which derive from ω-aminoundecanoic acid, laurolactam, the combination hexamethylenediamine/1,12-dodecanedioic acid, the combination 1,10-decanediamine/1,12-dodecanedioic acid, and/or the combination 1,12-dodecanediamine/1,12-dodecanedioic acid,
- the molding composition comprises block copolymers which have been formed from components a) and c).

## Revendications

1. Assemblage à plusieurs couches qui contient successivement les couches suivantes :
A. Une couche en une masse de moulage à base de PA11, de PA12, de PA612, de PA1012 et/ou de PA1212,
B. une couche I constituée par une masse de moulage qui contient les composants suivants :
a) 0 à 80 parties en poids d'un polyamide, choisi parmi le PA6, le PA66, le PA6/66 et les mélanges de ceux-ci,
b) 0 à 100 parties en poids d'un copolymère de polyamine-polyamide qui est préparé en utilisant les monomères suivants :
α) 0,5 à 25% en poids, par rapport au copolymère de polyamine-polyamide, d'une polyamine comprenant au moins 4 atomes d'azote et présentant un poids moléculaire numérique moyen Mₙ d'au moins 146 g/mole ainsi que
β) des monomères formant du polyamide, choisis parmi les lactames, les acides ω-aminocarboxyliques et/ou les combinaisons équimolaires de diamine et d'acide dicarboxylique,
c) 0 à 80 parties en poids d'un polyamide choisi parmi le PA11, le PA12, le PA612, le PA1012, le PA1212 et les mélanges de ceux-ci,
la somme des parties en poids des composants selon a), b) et c) étant égale à 100 et, en outre,
- dans la somme des composants a) et b), au moins 20 parties en poids étant constituées par des unités monomères qui sont dérivées du caprolactame et/ou de la combinaison hexaméthylènediamine/acide adipique et
- dans la somme des composants b) et c), au moins 20 parties en poids étant constituées par des unités monomères qui sont dérivées de l'acide ω-aminoundécanoïque, du lactame de l'acide laurique, de la combinaison hexaméthylènediamine/acide 1,12-dodécanedioïque, de la combinaison 1,10-décanediamine/acide 1,12-dodécanedioïque et/ou de la combinaison 1,12-dodécanediamine/acide 1,12-dodécanedioïque,
C. une couche II constituée par une masse de moulage formée par un copolymère d'éthylène-alcool vinylique.

2. Assemblage à plusieurs couches selon la revendication 1, **caractérisé en ce que** la masse de moulage de la couche I contient :
- au moins 0,5 partie en poids du composant selon a)
et/ou
- au moins 0,5 partie en poids du composant selon b)
et/ou
- au moins 0,5 partie en poids du composant selon c).

3. Assemblage à plusieurs couches selon l'une quelconque des revendications 1 et 2, **caractérisé en ce que** la masse de moulage de la couche I contient :
- au moins 10 parties en poids du composant selon a)
et/ou
- au moins 2 parties en poids du composant selon b)
et/ou
- au moins 10 parties en poids du composant selon c).

4. Assemblage à plusieurs couches selon l'une quelconque des revendications précédentes, **caractérisé en ce que** la masse de moulage de la couche I contient :
- au moins 20 parties en poids du composant selon a)
et/ou
- au moins 5 parties en poids du composant selon b)
et/ou
- au moins 20 parties en poids du composant selon c).

5. Assemblage à plusieurs couches selon l'une quelconque des revendications précédentes, **caractérisé en ce que** la masse de moulage de la couche I contient :
- au moins 30 parties en poids du composant selon a)
et/ou
- au moins 10 parties en poids du composant selon b)
et/ou
- au moins 30 parties en poids du composant selon c).

6. Assemblage à plusieurs couches selon l'une quelconque des revendications précédentes, **caractérisé en ce que** la masse de moulage de la couche I contient :
- au maximum 70 parties en poids du composant selon a) ou
- au maximum 80 parties en poids du composant selon b) ou
- au maximum 70 parties en poids du composant selon c).

7. Assemblage à plusieurs couches selon l'une quelconque des revendications précédentes, **caractérisé en ce que** la masse de moulage de la couche I contient :
- au maximum 60 parties en poids du composant selon a) ou
- au maximum 60 parties en poids du composant selon b) ou
- au maximum 60 parties en poids du composant selon c).

8. Assemblage selon l'une quelconque des revendications précédentes, **caractérisé en ce que** la masse de moulage de la couche I contient au maximum 40 parties en poids du composant selon b).

9. Assemblage à plusieurs couches selon l'une quelconque des revendications précédentes, **caractérisé en ce que** le copolymère de polyamine-polyamide est préparé avec utilisation de 1 à 20% en poids de la polyamine.

10. Assemblage à plusieurs couches selon l'une quelconque des revendications précédentes, **caractérisé en ce que** le copolymère de polyamine-polyamide est préparé avec utilisation de 1,5 à 16% en poids de la polyamine.

11. Assemblage à plusieurs couches selon l'une quelconque des revendications précédentes, **caractérisé en ce que** la polyamine contient au moins 8 atomes d'azote.

12. Assemblage à plusieurs couches selon l'une quelconque des revendications précédentes, **caractérisé en ce que** la polyamine contient au moins 11 atomes d'azote.

13. Assemblage à plusieurs couches selon l'une quelconque des revendications précédentes, **caractérisé en ce que** la polyamine présente un poids moléculaire numérique moyen Mₙ d'au moins 500 g/mole.

14. Assemblage à plusieurs couches selon l'une quelconque des revendications précédentes, **caractérisé en ce que** la polyamine présente un poids moléculaire numérique moyen Mₙ d'au moins 800 g/mole.

15. Assemblage à plusieurs couches selon l'une quelconque des revendications précédentes, **caractérisé en ce que** la concentration en groupes amino du copolymère de polyamine-polyamide se situe dans la plage de 100 à 2 500 mmoles/kg.

16. Assemblage à plusieurs couches selon l'une quelconque des revendications précédentes, **caractérisé en ce que** la masse de moulage de la couche I contient des copolymères à blocs qui sont formés à partir des composants selon a) et c).

17. Assemblage à plusieurs couches selon l'une quelconque des revendications précédentes, **caractérisé en ce qu'**il contient en outre au moins une couche formée par la masse de moulage à base de PA6, PA66 et/ou PA6/66.

18. Assemblage à plusieurs couches selon l'une quelconque des revendications précédentes, **caractérisé en ce qu'**il contient deux couches I.

19. Assemblage à plusieurs couches selon l'une quelconque des revendications précédentes, **caractérisé en ce qu'**il contient en outre une couche de produit recyclé.

20. Assemblage à plusieurs couches selon l'une quelconque des revendications précédentes, **caractérisé en ce qu'**il contient l'ordre de couches I / II / I.

21. Assemblage à plusieurs couches selon l'une quelconque des revendications 1 à 17 ainsi que 19, **caractérisé en ce qu'**il contient l'ordre des couches suivant :
a) une couche en une masse de moulage à base de PA11, de PA12, de PA612, de PA1012 et/ou de PA1212,
b) une couche I
c) une couche II
d) une couche en une masse de moulage à base de PA6, de PA66 et/ou de PA6/66.

22. Assemblage à plusieurs couches selon l'une quelconque des revendications précédentes, **caractérisé en ce que** la couche extérieure est constituée par une masse de moulage à base de PA11, PA12, PA612, PA1012 et/ou PA1212.

23. Assemblage à plusieurs couches selon l'une quelconque des revendications précédentes, **caractérisé en ce qu'**une des couches est réglée de manière électriquement conductrice.

24. Assemblage à plusieurs couches selon l'une quelconque des revendications 1 à 22, **caractérisé en ce que** la couche la plus interne est encore suivie d'une couche supplémentaire, électriquement conductrice.

25. Assemblage à plusieurs couches selon l'une quelconque des revendications précédentes, **caractérisé en ce que** les masses de moulage en polyamide utilisées contiennent au maximum 50% en poids d'additifs.

26. Assemblage à plusieurs couches selon l'une quelconque des revendications précédentes, **caractérisé en ce qu'**il s'agit d'un tuyau.

27. Assemblage à plusieurs couches selon la revendication 26, **caractérisé en ce qu'**il est complètement strié ou strié dans des zones partielles.

28. Assemblage à plusieurs couches selon l'une quelconque des revendications 1 à 25, **caractérisé en ce qu'**il s'agit d'un corps creux.

29. Assemblage à plusieurs couches selon l'une quelconque des revendications précédentes, **caractérisé en ce que** la couche la plus externe est encore suivie d'une couche en élastomère.

30. Assemblage à plusieurs couches selon l'une quelconque des revendications 1 à 27 ainsi que 29, **caractérisé en ce qu'**il s'agit d'une conduite pour carburant, d'une conduite pour liquide de frein, d'une conduite pour liquide de refroidissement, d'une conduite pour liquide hydraulique, d'une conduite pour station-service, d'une conduite pour climatisation ou d'une canalisation à vapeur.

31. Assemblage à plusieurs couches selon l'une quelconque des revendications 28 et 29, **caractérisé en ce qu'**il s'agit d'un réservoir, en particulier d'un réservoir pour carburant ou d'une tubulure de remplissage, en particulier une tubulure de remplissage de citerne.

32. Assemblage à plusieurs couches selon l'une quelconque des revendications 1 à 23, **caractérisé en ce qu'**il s'agit d'une feuille.

33. Assemblage à plusieurs couches selon l'une quelconque des revendications précédentes, **caractérisé en ce qu'**il est réalisé par moulage par injection à plusieurs composants, par coextrusion ou par moulage par soufflage et coextrusion.

34. Masse de moulage qui contient les composants suivants :
a) 0 à 80 parties en poids d'un polyamide, choisi parmi le PA6, le PA66, le PA6/66 et les mélanges de ceux-ci,
b) 0,5 à 100 parties en poids d'un copolymère de polyamine-polyamide qui est préparé en utilisant les monomères suivants :
α) 0,5 à 25% en poids, par rapport au copolymère de polyamine-polyamide, d'une polyamine comprenant au moins 4 atomes d'azote et présentent un poids moléculaire numérique moyen Mₙ d'au moins 146 g/mole ainsi que
β) des monomères formant du polyamide, choisis parmi les lactames, les acides ω-aminocarboxyliques et/ou les combinaisons équimolaires de diamine et d'acide dicarboxylique,
c) 0 à 80 parties en poids d'un polyamide choisi parmi le PA11, le PA12, le PA612, le PA1012, le PA1212 et les mélanges de ceux-ci,
la somme des parties en poids des composants selon a), b) et c) étant égale à 100 et, en outre,
- dans la somme des composants a) et b) au moins 20 parties en poids étant constituées par des unités monomères qui sont dérivées du caprolactame et/ou de la combinaison hexaméthylènediamine/acide adipique et
- dans la somme des composants b) et c) au moins 20 parties en poids étant constituées par des unités monomères qui sont dérivées de l'acide ω-aminoundécanoïque, du lactame de l'acide laurique, de la combinaison hexaméthylènediamine/acide 1,12-dodécanedioïque, de la combinaison 1,10-décanediamine/acide 1,12-dodécanedioïque et/ou de la combinaison 1,12-dodécanediamine/acide 1,12-dodécanedioïque.

35. Masse de moulage qui contient les composants suivants :
a) 0 à 80 parties en poids d'un polyamide, choisi parmi le PA6, le PA66, le PA6/66 et les mélanges de ceux-ci,
b) 0 à 100 parties en poids d'un copolymère de polyamine-polyamide qui est préparé en utilisant les monomères suivants :
α) 0,5 à 25% en poids, par rapport au copolymère de polyamine-polyamide, d'une polyamine comprenant au moins 4 atomes d'azote et présentant un poids moléculaire numérique moyen Mₙ d'au moins 146 g/mole ainsi que
β) des monomères formant du polyamide, choisis parmi les lactames, les acides ω-aminocarboxyliques et/ou les combinaisons équimolaires de diamine et d'acide dicarboxylique,
c) 0 à 80 parties en poids d'un polyamide choisi parmi le PA11, le PA12, le PA612, le PA1012, le PA1212 et les mélanges de ceux-ci,
la somme des parties en poids des composants selon a), b) et c) étant égale à 100 et, en outre,
- dans la somme des composants a) et b) au moins 20 parties en poids étant constituées par des unités monomères qui sont dérivées du caprolactame et/ou de la combinaison hexaméthylènediamine/acide adipique et
- dans la somme des composants b) et c) au moins 20 parties en poids étant constituées par des unités monomères qui sont dérivées de l'acide ω-aminoundécanoïque, du lactame de l'acide laurique, de la combinaison hexaméthylènediamine/acide 1,12-dodécanedioïque, de la combinaison 1,10-décanediamine/acide 1,12-dodécanedioïque et/ou de la combinaison 1,12-dodécanediamine/acide 1,12-dodécanedioïque
- la masse de moulage contenant des copolymères à blocs qui sont formés à partir des composants selon a) et c).
